Europäisches Patentamt

European Patent Office

Office européen des brevets

(19)

(11) Veröffentlichungsnummer: **0 234 023**
**B1**

(12) # EUROPÄISCHE PATENTSCHRIFT

(45) Veröffentlichungstag der Patentschrift:
**11.10.89**

(21) Anmeldenummer: **86117290.6**

(22) Anmeldetag: **11.12.86**

(51) Int. Cl.⁴: **A01D 34/00,** A01D 34/64,
A01D 34/66, A01D 34/82,
A01D 67/00

(54) **Druckmittelbetätigte Schwenkvorrichtung für Arbeitsgerätschaften, insbesondere für Randstreifenmäher.**

(30) Priorität: **28.12.85 DE 3546288**

(43) Veröffentlichungstag der Anmeldung:
**02.09.87 Patentblatt 87/36**

(45) Bekanntmachung des Hinweises auf die Patenterteilung:
**11.10.89 Patentblatt 89/41**

(84) Benannte Vertragsstaaten:
**AT BE CH DE ES FR GB GR IT LI LU NL SE**

(56) Entgegenhaltungen:
**AU-B- 507 369**
**DE-A- 1 927 793**
**DE-A- 2 707 480**
**DE-A- 3 046 703**
**DE-A- 3 116 984**
**DE-A- 3 129 860**
**US-A- 4 104 851**

(73) Patentinhaber: **Doppstadt, Werner, Vossnacker
Strasse 67, D-5620 Velbert 11 - Langenberg(DE)**

(72) Erfinder: **Doppstadt, Werner, Vossnacker Strasse 67,
D-5620 Velbert 11 - Langenberg(DE)**

(74) Vertreter: **Weisse, Jürgen, Dipl.-Phys. et al,
Patentanwälte Dipl.-Phys. Jürgen Weisse Dipl.-Chem.
Dr. Rudolf Wolgast Bökenbusch 41 Postfach 11 03 86,
D-5620 Velbert 11 Langenberg(DE)**

**Beschreibung**

Die Erfindung betrifft eine fühlergesteuerte druckmittelbetätigte Schwenkvorrichtung für in einer Bewegungsrichtung vorwärtsbewegte Arbeitsgerätschaften, insbesondere für Randstreifenmäher, zur Erzeugung einer Ausweichbewegung der Arbeitsgerätschaft, wenn der Fühler auf ein Hindernis trifft, bei welcher

(a) der Fühler von einem sich im Abstand vor der Arbeitsgerätschaft erstreckenden, langgestreckten, entgegen der Bewegungsrichtung der Arbeitsgerätschaft auslenkbar gehalterten Fühlerkörper gebildet ist und
(b) von einer Auslenkbewegung des Fühlerkörpers ein druckmittelbetätigter Stellmotor im Sinne einer Verschwenkung der Arbeitsgerätschaft entgegen der besagten Bewegungsrichtung ansteuerbar ist.

Randstreifenmäher dienen dazu, die Randstreifen von Fernstraßen zu mähen. Sie werden an einem Trägerfahrzeug angebracht, wobei der Träger des Randstreifenmähers sich im wesentlichen in Fahrtrichtung (Bewegungsrichtung) erstreckt. An diesem Träger ist ein Arm mit einem Mähkopf angelenkt. Der Arm ist durch einen hydraulischen Hubmotor aus- und einschwenkbar. Das Einschwenken erfolgt einmal während der Fahrt zum oder vom Einsatzort. Außerdem muß der Arm mit dem Mähkopf eingeschwenkt werden, wenn sich auf dem Randstreifen Hindernisse wie Leitpfosten oder Bäume befinden. Zu diesem Zweck ist an dem Mähkopf ein Fühler angebracht, der beim Auftreffen auf ein Hindernis den Hubmotor so ansteuert, daß der Arm mit dem Mähkopf einwärtsgeschwenkt wird und an dem Hindernis vorbeigehen kann. Nach Passieren des Hindernisses wird der Hubmotor von dem Fühler so gesteuert, daß der Arm mit dem Mähkopf wieder nach außen geschwenkt wird.

Der Fühler ist von einem sich im Abstand vor dem Mähkopf erstreckenden, langgestreckten Fühlerkörper gebildet, der entgegen der Fahrtrichtung (Bewegungsrichtung) auslenkbar gehalten ist. Wenn der Fühler auf ein Hindernis stößt, wird er ausgelenkt. Von dieser Auslenkbewegung ist der als Hubmotor ausgebildete Stellmotor so ansteuerbar, daß er eine Verschwenkung des Mähkopfes bewirkt und der Mähkopf an dem Hindernis vorbeigehen kann DE-OS 31 16 984.

Ähnliche Probleme können natürlich auch bei anderen Arbeitsgerätschaften auftreten.

Die bekannten Schwenkvorrichtungen haben verschiedene Nachteile:
Es bietet Schwierigkeiten, die Stellgeschwindigkeit der Schwenkvorrichtung an die Fahrgeschwindigkeit eines Trägerfahrzeugs anzupassen. Wenn das Trägerfahrzeug zu schnell fährt, weicht die Schwenkvorrichtung nicht schnell genug aus. Es kann dann eine Beschädigung der Arbeitsgerätschaft oder des Hindernisses (z.B. eines Leitpfostens) erfolgen. Ist die Schwenkbewegung im Vergleich zur Fahrgeschwindigkeit zu schnell, dann bewegt sich die Arbeitsgerätschaft beim Einwärtsschwenken ruckweise. Die Schwenkbewegung erfolgt relativ schnell so lange, bis der Fühler außer Anlage an dem Hindernis kommt. Dann wird die Schwenkbewegung unterbrochen, bis der Fühler bei weiterer Vorbewegung des Fahrzeugs wieder von dem Hindernis ausgelenkt wird. Eine solche ruckweise Bewegung bringt unerwünschte Schwingungen am ganzen Fahrzeug und in dem Druckmittelsystem mit sich und führt zu schnellem Verschleiß der Teile.

Ein weiteres Problem besteht darin, daß der Fühlerkörper in der Arbeitsstellung einen ausreichenden Abstand von der Arbeitsgerätschaft haben muß, damit in der Arbeitsstellung beim Berühren eines Hindernisses durch den Fühlerkörper auch bei relativ hoher Geschwindigkeit des Fahrzeugs ein sicheres Einschwenken der Arbeitsgerätschaft gewährleistet ist. Nach dem Passieren des Hindernisses sollte aber die Arbeitsgerätschaft möglichst schnell wieder in ihre Arbeitsstellung zurückkehren, so daß z.B. bei einem Randstreifenmäher nicht ein unerwünscht großer Bereich hinter einem Leitpfosten ungemäht bleibt. Bei bekannten Schwenkvorrichtungen bringt der "Sicherheitsabstand" zwischen Fühlerkörper und Arbeitsgerätschaft, der in der Arbeits stellung erforderlich ist, nach dem Passieren des Hindernisses einen unerwünscht großen unbearbeiteten Bereich mit sich.

Der Erfindung liegt die Aufgabe zugrunde, eine fühlergesteuerte, druckmittelbetätigte Schwenkvorrichtung für in einer Arbeitsrichtung vorwärtsbewegte Arbeitsgerätschaften, insbesondere für Randstreifenmäher, so auszubilden, daß bei allen üblichen Fahrgeschwindigkeiten eine gleichmäßige Schwenkbewegung in die eingeschwenkte Stellung gewährleistet ist, wobei andererseits auch sichergestellt ist, daß im oberen Geschwindigkeitsbereich keine Beschädigung des Hindernisses oder der Arbeitsgerätschaft durch zu langsames Einschwenken erfolgen kann.

Erfindungsgemäß wird diese Aufgabe dadurch gelöst, daß

(c) zur Steuerung des Stellmotors ein erstes und ein zweites Steuerglied vorgesehen sind, durch welche ein Druckmittelstrom auf den Stellmotor im Sinne einer Verschwenkung der Arbeitsgerätschaft entgegen der Bewegungsrichtung bzw. im Sinne einer Verschwenkung in der Bewegungsrichtung aufschaltbar ist,
(d) die Steuerglieder von der Auslenkbewegung des Fühlerkörpers über ein erstes Betätigungsglied betätigbar sind,
(e) die Steuerglieder auf einem ersten Träger angeordnet sind, der nach Maßgabe der Verschwenkung der Arbeitsgerätschaft in einem der Betätigung entgegenwirkenden Sinne relativ zu dem ersten Betätigungsglied bewegbar ist,
(f) dem Stellmotor ein Drosselventil parallelgeschaltet ist, dessen Durchflußquerschnitt über ein zweites Betätigungsglied nach Maßgabe der Auslenkung des Fühlerkörpers im Sinne eines mit zunehmender Auslenkung sich verringernden Durchflußquerschnitt veränderbar ist.

Durch die Steuerglieder wird bei Auslenkung des Fühlergliedes eine Schwenkrichtung vorgegeben. Durch die Bewegung des die Steuerglieder tragenden ersten Trägers erfolgt eine Rückführung. Die durch die Steuerglieder erzeugten Druckmittelströme bewirken jedoch allein noch keine Schwenkbewegung, da dem die Schwenkbewegung bewirkenden druckmittelbetätigten Stellmotor das Drosselventil parallelgeschaltet ist und bei geöffnetem Drosselventil die Druckmittelströme nicht auf den Stellmotor gehen, sondern über das Drosselventil zum Behälter zurückfließen. Durch die Auslenkung des Fühlerkörpers wird jedoch über das zweite Betätigungsglied der Drosselquerschnitt nach Maßgabe dieser Auslenkung gedrosselt, so daß der Druckmittelstrom auf den Stellmotor geleitet wird und die Schwenkbewegung einleitet. Die Geschwindigkeit der Schwenkbewegung ist dadurch stetig von der Auslenkung des Fühlerkörpers abhängig. Das hat zur Folge, daß bei einer langsamen Fahrgeschwindigkeit die Schwenkbewegung relativ langsam erfolgt, wobei der Fühlerkörper ständig in Kontakt mit dem Hindernis bleibt. Bei größerer Fahrgeschwindigkeit stellt sich ein Zustand ein, bei welchem der Fühlerkörper stärker ausgelenkt wird und dementsprechend der Stellmotor auch mit einem größeren Ölstrom beaufschlagt ist und dementsprechend auch die Schwenkbewegung schneller wird. Die Geschwindigkeit der Schwenkbewegung ist dadurch an die Fahrgeschwindigkeit automatisch angepaßt.

Das Drosselventil kann an einem zweiten Träger angeordnet sein und der zweite Träger kann bei einer Verschwenkung der Arbeitsgerätschaft im Sinne einer Verringerung des Drosselquerschnitts relativ zu dem zweiten Betätigungsglied bewegbar sein. Dadurch wird die Stellgeschwindigkeit, die beim Ansprechen eines der Steuerglieder wirksam wird, umso größer, je weiter die Arbeitsgerätschaft eingeschwenkt ist. Dadurch wird sichergestellt, daß nach Passieren des Hindernisses, wenn der Fühlerkörper freigegeben wird und in seine Ausgangsstellung zurückgeht, die Arbeitsgerätschaft schnell wieder in die Arbeitsstellung bewegt wird.

Weiterhin kann das Fühlerglied an einem Gestänge sitzen, durch welches Abstand zwischen Fühlerglied und Arbeitsgerätschaft bei Verschwenkung der Arbeitsgerätschaft verringerbar ist.

Es ist dann bei eingeschwenkter Arbeitsgerätschaft kein großer Abstand zwischen Fühlerkörper und Arbeitsgerätschaft mehr vorhanden, so daß nach Freigabe des Fühlerkörpers durch das Hindernis die Arbeitsgerätschaft sofort hinter dem Fühlerkörper her auswärtsbewegt werden kann, ohne daß erst ein Zwischenraum zwischen Fühlerkörper und Arbeitsgerätschaft durchlaufen zu werden braucht.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 zeigt eine schematische Draufsicht auf einen Randstreifenmäher.

Fig. 2 zeigt eine Draufsicht auf das Gestänge und die Steuermittel der Schwenkvorrichtung.

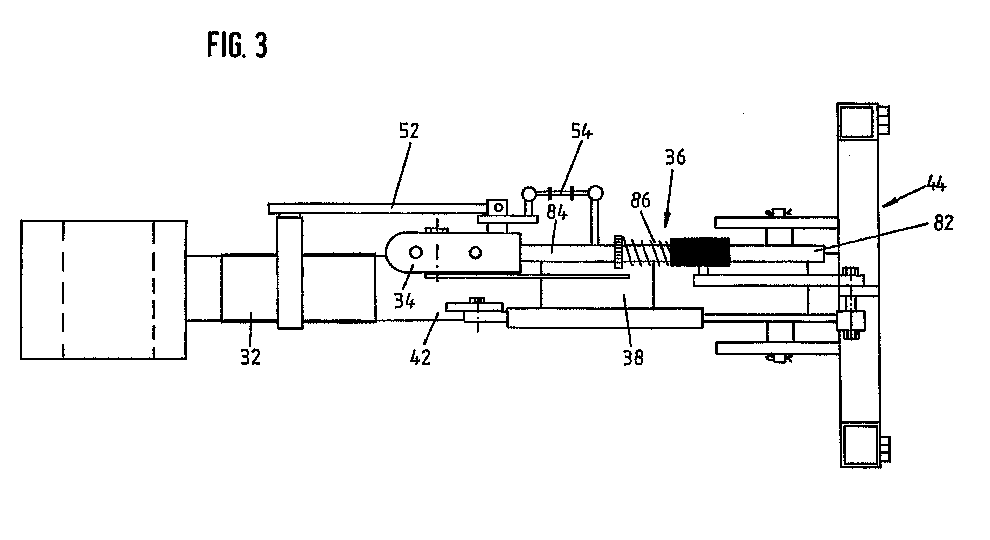

Fig. 3 zeigt eine Seitenansicht der Anordnung von Fig. 2.

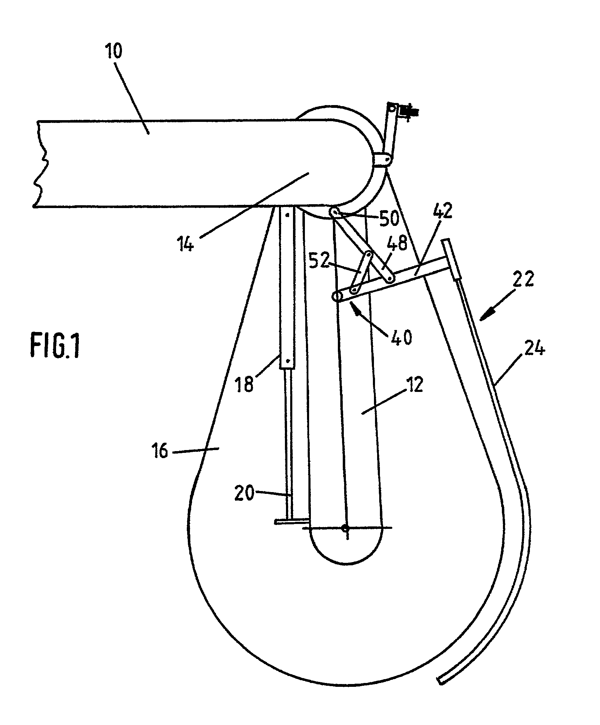

In Fig. 1 ist mit 10 ein Grundkörper bezeichnet, der in geeigneter Weise vorn an einem (nicht dargestellten) Trägerfahrzeug angebracht ist. An dem Grundkörper 10 ist ein Arm 12 um eine Schwenkachse 14 verschwenkbar angebracht. An dem Arm 12 sitzt eine Arbeitsgerätschaft in Form eines Randstreifenmähers 16. Der Arm 12 ist durch einen druckmittelbetriebenen Stellmotor 18 verschwenkbar, der hier ein hydraulischer Hubmotor mit einer Kolbenstange 20 ist. Durch einen Fühler 22 ist der Stellmotor 18 so steuerbar, daß die Arbeitsgerätschaft 16 eine Ausweichbewegung im Uhrzeigersinn um die Schwenkachse 14 ausführt, wenn der Fühler 22 auf ein Hindernis, beispielsweise einen Leitpfosten oder einen Baum, trifft.

Der Fühler 22 ist von einem sich im Abstand vor der Arbeitsgerätschaft 16 erstreckenden, langgestreck ten, entgegen der Bewegungsrichtung der Arbeitsgerätschaft (nach rechts in Fig.1) auslenkbar gehaltenen Fühlerkörper 24 gebildet. Von einer Auslenkbewegung des Fühlerkörpers ist der druckmittelbetätigte Stellmotor 18 im Sinne einer Verschwenkung der Arbeitsgerätschaft 16 entgegen der besagten Bewegungsrichtung ansteuerbar.

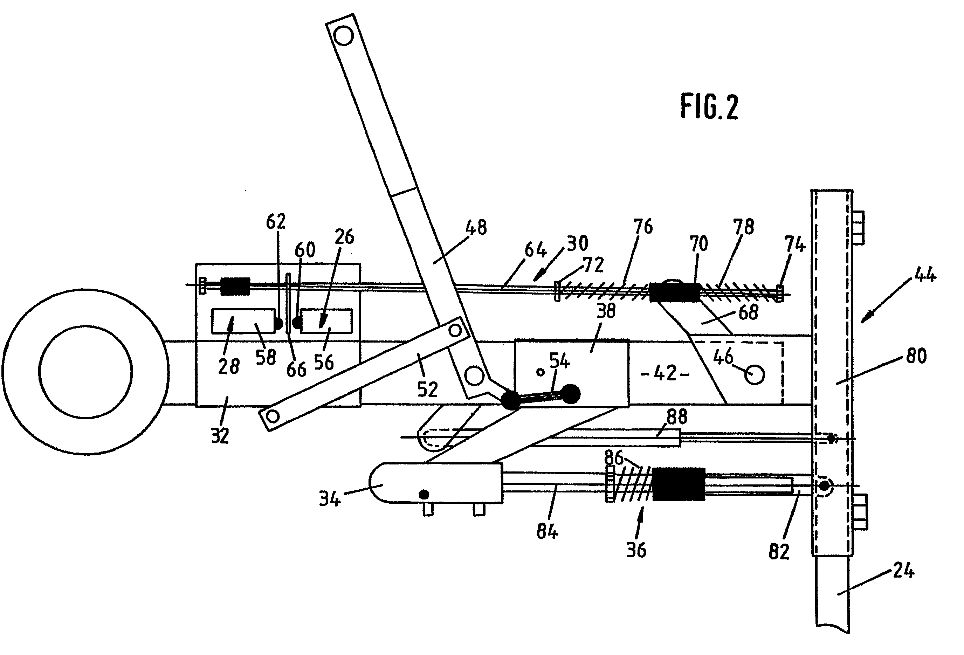

Wie aus Fig.2 ersichtlich ist, ist zur Steuerung des Stellmotors 18 ein erstes und ein zweites Steuerglied 26,28 vorgesehen, durch welche ein Druckmittelstrom auf den Stellmotor 18 im Sinne einer Verschwenkung der Arbeitsgerätschaft 16 entgegen der Bewegungsrichtung bzw. im Sinne einer Verschwenkung in der Bewegungsrichtung aufschaltbar ist.

Die Steuerglieder 26,28 sind von der Auslenkbewegung des Fühlerkörpers 22 über ein erstes Betätigungsglied 30 betätigbar. Die Steuerglieder 26 und 28 sind auf einem ersten Träger 32 angeordnet, der nach Maßgabe der Verschwenkung der Arbeitsgerätschaft in einem der Betätigung entgegenwirkenden Sinne relativ zu dem ersten Betätigungsglied 30 bewegbar ist. Dem Stellmotor 18 ist ein Drosselventil 34 parallelgeschaltet, dessen Durchflußquerschnitt über ein zweites Betätigungsglied 36 nach Maßgabe der Auslenkung des Fühlerkörpers im Sinne eines mit zunehmender Auslenkung sich verringernden Durchflußquerschnitts veränderbar ist.

Das Drosselventil 34 ist an einem zweiten Träger 38 angeordnet. Der zweite Träger 38 ist bei einer Verschwenkung der Arbeitsgerätschaft 16 im Sinne einer Verringerung des Drosselquerschnitts relativ zu dem zweiten Betätigungsglied 36 bewegbar. Der Fühlerkörper 24 sitzt an einem Gestänge 40 (Fig.1), durch welches der Abstand zwischen Fühlerkörper 24 und Arbeitsgerätschaft 16 bei Verschwenkung der Arbeitsgerätschaft 16 verringerbar ist.

Im einzelnen ist der Aufbau folgender: Die Arbeitsgerätschaft 16 sitzt, wie gesagt, an dem Arm 12, der durch den Stellmotor 18 um die Schwenkachse 14 gegenüber dem Grundkörper 10 verschwenkbar ist. Das Gestänge 40 weist einen Schwenkhebel 42 auf, der an den Arm 12 schwenkbar gelagert ist. Wie aus Fig.2 ersichtlich ist, ist der Fühlerkörper 24 an einem Kippglied 44 befestigt, das um eine Achse 46 kippbar an dem freien Ende des Schwenkhebels 42 gelagert ist. Der erste Träger 32 ist an dem Schwenkhebel 42 verschiebbar geführt. Der zweite Träger 38 ist an dem Schwenkhebel zwischen dem ersten Träger 32 und dem Kippglied 44 verschiebbar geführt. Das Gestänge 40 weist weiterhin einen ersten Lenker 48 auf, der einerseits an dem Grundkörper 10 in einem Anlenkpunkt 50 angelenkt ist, welcher gegenüber der Schwenkachse 14 etwa in Richtung der Längsachse des Armes 12 bei Arbeitsstellung desselben versetzt ist, und der andererseits an dem zweiten Träger 42 angelenkt ist. Ferner weist das Gestänge 40 einen zweiten Lenker 52 auf, der einerseits an dem ersten Träger 32 und andererseits an dem ersten Lenker 48 angelenkt ist. Der erste Lenker 48 ist mit dem zweiten Träger 38 über einen dritten Lenker 54 verbunden.

Die Steuerglieder 26,28 enthalten ein Paar von Mikroschaltern 56,58, die miteinander zugewandten Schaltköpfen 60 bzw. 62 auf dem ersten Träger 32 angeordnet sind und durch welche über Magnetwicklungen druckmittelsteuernde Mittel steuerbar sind. Das erste Betätigungsglied 30 weist eine längsbewegliche Schaltstange 64 auf, die mit einem seitlichen Schaltarm 66 zwischen die Schaltköpfe 60,62 der Mikroschalter 56,58 greift. An dem Kippglied 44 ist ein seitlicher Arm 68 vorgesehen, der mit einem auf der Schaltstange 64 geführten Druckstück 70 gekoppelt ist. An der Schaltstange 64 sind im Abstand zu beiden Seiten des Druckstücks 70 Federwiderlager 72,74 angebracht. Wendelfedern 76 bzw. 78, welche die Schaltstange 64 umgeben, liegen einerseits an je einer Stirnfläche des Druckstücks 70 und andererseits an dem dieser Stirnfläche gegenüberliegenden Federwiderlager 72 bzw. 74 an.

Das Kippglied 44 weist einen im wesentlichen senkrecht zur Längsachse des Schwenkarms 42 sich erstreckenden Querbalken 80 auf. Das zweite Betätigungsglied 36 ist an den Querbalken 80 angelenkt. Das zweite Betätigungsglied 36 ist eine Betätigungsstange, die aus zwei teleskopartig gegeneinander verschiebbaren Teilen 82,84 besteht, welche über eine gegen einen Anschlag vorgespannte Feder 86 miteinander gekoppelt sind.

Weiterhin ist zwischen Schwenkhebel 42 und Kippglied 44 ein Stoßdämpfer 88 vorgesehen.

Die beschriebene Anordnung arbeitet wie folgt:

Die Arbeitsgerätschaft (Randstreifenmäher) 16 bewegt sich nach rechts in Fig.1. Wenn der Fühler 22 gegen ein Hindernis stößt, wird durch den Fühlerkörper 24 das Kippglied 44 verschwenkt. Über das Betätigungsglied 30 wird der Mikroschalter 26 betätigt. Dieser bewirkt, über den Stellmotor 18, eine Schwenkbewegung des Armes 12 mit der Arbeitsgerätschaft 16 im Uhrzeigersinn, um dem Hindernis auszuweichen. Mit der Schwenkbewegung wird der Träger 32 gegenüber dem Schwenkhebel 42 nach rechts in Fig.2 verschoben. Man kann sich vorstellen, daß bei der Schwenkbewegung der Schwenkhebel 42 mit dem Arm 12 nach unten wegbewegt wird, während der Träger 32 durch den Lenker 48 und den Lenker 52 festgehalten wird. Dadurch würde der Mikroschalter 56 wieder öffnen. Infolge des Drosselventils 34, das strömungsmäßig parallel zu dem Stellmotor 18 liegt, schließt ein Teil des von dem Mikroschalter 56 gesteuerten Druckmittelstrom zum Behälter ab, wodurch die Stellgeschwindigkeit verringert wird. Es stellt sich ein Zustand ein, in welchem die Schwenkbewegung so an die Fahrgeschwindigkeit des Trägerfahrzeugs angepaßt ist, daß der Fühlerkörper 24 ständig in Anlage an dem Hindernis gehalten wird und eine solche Stellgeschwindigkeit des Stellmotors 18 über das Drosselventil 34 kommandiert, daß die Arbeitsgerätschaft 16 in gleichem Maße nach links in Fig.1 um die Schwenkachse 14 verschwenkt wird, wie das Trägerfahrzeug mit dem Grundkörper 10 sich nach rechts vorwärtsbewegt. Die Schwenkbewegung wird dadurch stetig an die Fahrgeschwindigkeit des Trägerfahrzeugs angepaßt.

Das Gestänge ist so, daß bei der Schwenkbewegung der Arbeitsgerätschaft 16 eine Verschiebung des Fühlerkörpers 24 relativ zu der Arbeitsgerätschaft 16 nach oben in Fig.1 erfolgt. Der Fühlerkörper 24 wird also von der Arbeitsgerätschaft 16 etwas zurückgezogen. Gleichzeitig wird der Abstand zwischen Fühlerkörper 24 und Arbeitsgerätschaft 16 verringert.

In gleicher Weise wie der Träger 32 in Fig.2 bei der Schwenkbewegung relativ zu dem Schwenkhebel 42 nach rechts in Fig.2 verschoben wird, erfolgt auch eine Verschiebung des zweiten Trägers 38 nach rechts. Dadurch wird die relative Lage zwischen Drosselventil 34 und Betätigungsglied 36 verändert. Das Drosselventil 34 wird stärker gedrosselt, so daß die Stellgeschwindigkeit erhöht wird. In der eingeschwenkten Lage reagiert daher der Stellmotor 18 schneller, so daß nach Freigabe des Fühlers 22 durch das Hindernis die Arbeitsgerätschaft schnell wieder in ihre Arbeitsstellung verschwenkt wird.

**Patentansprüche**

1. Fühlergesteuerte, druckmittelbetätigte Schwenkvorrichtung für in einer Bewegungsrichtung vorwärtsbewegte Arbeitsgerätschaften, insbesondere für Randstreifenmäher, zur Erzeugung einer Ausweichbewegung der Arbeitsgerätschaft, wenn der Fühler auf ein Hindernis trifft, bei welcher

(a) der Fühler (22) von einem sich im Abstand vor der Arbeitsgerätschaft (16) erstreckenden, langgestreckten entgegen der Bewegungsrichtung der Arbeitsgerätschaft auslenkbar gehalterten Fühlerkörper (24) gebildet ist und

(b) von einer Auslenkbewegung des Fühlerkörpers (24) ein druckmittelbetätigter Stellmotor (18) im Sinne einer Verschwenkung der Arbeitsgerätschaft entgegen der besagten Bewegungsrichtung ansteuerbar ist,

dadurch gekennzeichnet, daß

(c) zur Steuerung des Stellmotors (18) ein erstes und ein zweites Steuerglied (26,28) vorgesehen sind, durch welche ein Druckmittelstrom auf den Stellmotor (18) im Sinne einer Verschwenkung der Arbeitsgerätschaft (16) entgegen der Bewegungs richtung bzw. im Sinne einer Verschwenkung in der Bewegungsrichtung aufschaltbar ist,

(d) die Steuerglieder (26,28) von der Auslenkbewegung des Fühlerkörpers (24) über ein erstes Betätigungsglied (30) betätigbar sind,

(e) die Steuerglieder (26,28) auf einem ersten Träger (32) angeordnet sind, der nach Maßgabe der Verschwenkung der Arbeitsgerätschaft (l6) in einem der Betätigung entgegenwirkenden Sinne relativ zu dem ersten Betätigungsglied (30) bewegbar ist,

(f) dem Stellmotor (l8) ein Drosselventil (34) parallelgeschaltet ist, dessen Durchflußquerschnitt über ein zweites Betätigungsglied (36) nach Maßgabe der Auslenkung des Fühlerkörpers (24) im Sinne eines mit zunehmender Auslenkung sich verringernden Durchflußquerschnitts veränderbar ist.

2. Schwenkvorrichtung nach Anspruch l, dadurch gekennzeichnet, daß

(a) das Drosselventil (34) an einem zweiten Träger (38) angeordnet ist und

(b) der zweite Träger (38) bei einer Verschwenkung der Arbeitsgerätschaft (l6) im Sinne einer Verringerung des Drosselquerschnitts relativ zu dem zweiten Betätigungsglied (36) bewegbar ist.

3. Schwenkvorrichtung nach Anspruch l oder 2, dadurch gekennzeichnet, daß der Fühlerkörper (24) an einem Gestänge (40) sitzt, durch welches der Abstand zwischen Fühlerkörper (24) und Arbeitsgerätschaft (l6) bei Verschwenkung der Arbeitsgerätschaft (l6) verringerbar ist.

4. Schwenkvorrichtung nach Anspruch 3, dadurch gekennzeichnet, daß

(a) die Arbeitsgerätschaft (l6) an einem Arm (l2) sitzt, der durch den Stellmotor (l8) um eine Schwenkachse (l4) gegenüber einem Grundkörper (l0) verschwenkbar ist,

(b) das Gestänge (40) einen Schwenkhebel (42) aufweist, der an dem Arm (l2) schwenkbar gelagert ist,

(c) der Fühlerkörper (24) an einem Kippglied (44) befestigt ist, das kippbar an dem freien Ende des Schwenkhebels (42) gelagert ist,

(d) der erste Träger (32) an dem Schwenkhebel (42) verschiebbar geführt ist,

(e) der zweite Träger (38) an dem Schwenkhebel (42) zwischen dem ersten Träger (32) und dem Kippglied (44) verschiebbar geführt ist,

(f) das Gestänge (40) weiterhin einen ersten Lenker (48) aufweist, der einerseits an dem Grundkörper (l0) in einem Anlenkpunkt (50) angelenkt ist, welcher gegenüber der Schwenkachse (l4) etwa in Richtung der Längsachse des Armes (l2) bei Arbeitsstellung desselben versetzt ist, und der andererseits an dem zweiten Träger (38) angelenkt ist, und

(g) das Gestänge (40) einen zweiten Lenker (52) aufweist, der einerseits an dem ersten Träger (32) und andererseits an dem ersten Lenker (48) angelenkt ist.

5. Schwenkvorrichtung nach Anspruch 4, dadurch gekennzeichnet, daß der erste Lenker (48) mit dem zweiten Träger (38) über einen dritten Lenker (54) verbunden ist.

6. Schwenkvorrichtung nach Anspruch 4 oder 5, dadurch gekennzeichnet, daß

(a) die Steuerglieder (26,28) ein Paar von Mikroschaltern (56,58) enthalten, die mit einander zugewandten Schaltköpfen (60,62) auf dem ersten Träger (32) angeordnet sind und durch welche über Magnetwicklungen druckmittelsteuernde Mittel steuerbar sind,

(b) das erste Betätigungsglied (30) eine längsbewegliche Schaltstange (64) aufweist, die mit einem seitlichen Schaltarm (66) zwischen die Schaltköpfe (60,62) der Mikroschalter (56,58) greift,

(c) an dem Kippglied (44) ein seitlicher Arm (68) vorgesehen ist, der mit einem auf der Schaltstange (64) geführten Druckstück (70) gekoppelt ist, und

(d) an der Schaltstange (64) im Abstand zu beiden Seiten des Druckstücks (70) Federwiderlager (72,74) angebracht sind und Wendelfedern (76,78), welche die Schaltstange (64) umgeben, einerseits an je einer Stirnfläche des Druckstücks (70) und andererseits an dem dieser Stirnfläche gegenüberliegenden Federwiderlager (72,74) anliegen.

7. Schwenkvorrichtung nach einem der Ansprüche 4 bis 6, dadurch gekennzeichnet, daß

(a) das Kippglied (44) einen im wesentlichen senkrecht zu der Längsachse des Schwenkhebels (42) sich erstreckenden Querbalken (80) aufweist und

(b) das zweite Betätigungsglied (36) an dem Querbalken (80) angelenkt ist.

8. Schwenkvorrichtung nach Anspruch 7, dadurch gekennzeichnet, daß das zweite Betätigungsglied (86) eine Betätigungsstange ist, die aus zwei teleskopartig gegeneinander verschiebbaren Teilen (82,84) besteht, welche über eine gegen einen Anschlag vorgespannte Feder (86) miteinander gekoppelt sind.

9. Schwenkvorrichtung nach einem der Ansprüche 4 bis 8, dadurch gekennzeichnet, daß zwischen Schwenkhebel (42) und Kippglied (44) ein Stoßdämpfer (88) vorgesehen ist.

**Claims**

1. Sensor controlled pivot device actuated by fluid for tools advanced in one moving direction, particularly for verge mowers, for providing a yielding movement of the tool when the sensor hits an obstacle, in which

a) the sensor (22) is formed by an elongated sensor body (24) extending at a distance from the tool (16) and supported pivotally against the moving direction of the tool, and

b) a servomotor (18) actuated by fluid is adapted to be energized by a deflecting movement of the sensor body (24) in order to pivot the tool against said moving direction, characterized in that

c) a first and a second control member (26, 28) is provided for controlling the servomotor (18), which control members (26, 28) are adapted to apply a fluid current to the servomotor (18) in order to pivot the tool (16) against the moving direction and in order to pivot the tool (16) in the moving direction, respectively,

d) the control members (26, 28) are adapted to be actuated by the deflecting movement of the sensor body (24) through a first actuating member (30),

e) the control members (26, 28) are arranged on a first support (32), which, according to the pivoting of the tool (16), is movable relative to the first actuating member (30) in order to act against the actuation,

f) a throttle valve (34) is connected in parallel with the servomotor (18), the flow cross section of which throttle valve (34) is variable through a second actuating member (36) according to the deflection of the sensor body (24) in order to reduce the flow cross section when the deflection increases.

2. Pivot device as set forth in claim 1, characterized in that

a) the throttle valve (34) is arranged on a second support (38) and

b) the second support (38) is movable relative to the second actuating member (36) in order to reduce the throttle cross section when the tool (16) is pivoted.

3. Pivot device as set forth in claim 1 or 2, characterized in that the sensor body (24) is located on a rod system (40), which is adapted to reduce the distance between sensor body (24) and tool (16) when the tool (16) is pivoted.

4. Pivot device as set forth in claim 3, characterized in that

a) the tool (16) is located on an arm (12), which is pivotable through the servomotor (18) about a pivot axis (14) relative to a basic body (10),

b) the rod system (40) has a pivot lever (42), which is pivotably mounted on the arm (12),

c) the sensor body (24) is attached to a tilting member (44), which is tiltably mounted at the free end of the pivot lever (42),

d) the first support (32) is slideably guided on the pivot lever (42),

e) the second support (38) is slideably guided on the pivot lever (42) between the first support (32) and the tilting member (44),

f) furthermore, the rod system (40) has a first link (48) which, on one hand, is pivoted on the basic body (10) in a pivotal point (50), which point is displaced relative to the pivot axis (14) approximately in the direction of the longitudinal axis of the arm (12) when the arm (12) is in operating position, and, on the other hand, is also pivoted on the second support (38), and

g) the rod system (40) has a second link (52) which at one end is pivoted on the first support (32) and, at the other end, is pivoted on the first link (48).

5. Pivot device as set forth in claim 4, characterized in that the first link (48) is connected to the second support (38) through a third link (54).

6. Pivot device as set forth in claim 4 or 5, characterized in that

a) the control members (26, 28) comprise a pair of microswitches (56, 58), which, having switch heads (60, 62) facing each other, are arranged on the first support (32) and which are adapted to control fluid controlling means through magnet windings,

b) the first actuating member (30) has a longitudinally movable switch bar (64), which extends with a lateral switch arm (66) between the switch heads (60, 62) of the microswitches (56, 58),

c) a lateral arm (68) is provided at the tilting member (44), which arm (68) is coupled to a thrust piece (70) guided on the switch bar (64), and

d) spring abutments (72, 74) are attached to the switch bar (64) on both sides of the thrust piece and spaced therefrom, and spiral springs (76, 78) surrounding the switch bar (64) engage, on one hand, a front surface of the thrust piece (70) each and, on the other hand, the spring abutment (72, 74) facing this front surface.

7. Pivot device as set forth in anyone of the claims 4 to 6, characterized in that

a) the tilting member (44) has a transverse bar (80) substantially extending perpendicularly to the longitudinal axis of the pivot lever (42), and

b) the second actuating member (36) is pivoted on the transverse bar (80).

8. Pivot device as set forth in claim 7, characterized in that the the second actuating member (36) is an actuating bar, which consists of two portions (82, 84) telescopically slideable relative to each other, which portions (82, 84) are coupled to each other through a spring (86) biased against a stop.

9. Pivot device as set forth in anyone of the claims 4 to 8, characterized in that a shock absorber (88) is provided between pivot lever (42) and tilting member (44).

## Revendications

1. Dispositif de pivotement commandé par capteur et actionné par fluide pour des outillages avancés dans une direction de mouvement, particulièrement pour des tondeuses d'accotement, déstiné à engendrer un mouvement d'évitement de l'outillage lorsque le capteur rencontre un obstacle, dans lequel

a) le capteur (22) est formé par un corps de capteur (24) allongé s'étendant avec un espacement de l'outillage (16) et supporté de manière pivotable contre la direction de mouvement de l'outillage, et

b) un servomoteur (18) actionné par fluide est commandable par un mouvement déflecteur du corps de capteur (24) afin de pivoter l'outillage contre ladite direction de mouvement,

caractérisé par le fait que

c) un premier et un deuxième membre de commande (26, 28) est prévu pour commander le servomoteur (18), les membres de commande étant adaptés à appliquer un courant de fluide au servomoteur (18) afin de faire pivoter l'outillage (16) contre la direction de mouvement et afin de pivoter l'outillage (16) dans la direction de mouvement, respectivement,

d) les membres de commande (26, 28) sont actionnables par le mouvement déflecteur du corps de capteur (24) par un premier membre d'actionnement (30),

e) les membres de commande (26, 28) sont disposés sur un premier support (32) qui, selon le pivotement de l'outillage (16), est déplacable relativement au premier membre d'actionnement (30) afin d'agir contre l'actionnement,

f) une soupape d'étranglement (34) est connectée en parallèle au servomoteur (18), la section transversale d'écoulement de la soupape étant variable par un deuxième membre d'actionnement (36) selon la déflection du corps de capteur (24) afin de réduire la section transversale d'écoulement lorsque la déflection augmente.

2. Dispositif de pivotement selon la revendication 1, caractérisé par le fait que (a) la soupape d'étranglement est disposée sur un deuxième support (38), et

(b) le deuxième support (38) est déplacable relativement au deuxième membre d'actionnement (36) afin de réduire la section transversale d'étranglement lorsque l'outillage (16) est pivoté.

3. Dispositif de pivotement selon la revendication 1 ou 2, caractérisé par le fait que le corps de capteur (24) est situé sur un système de tiges (40) qui peut réduire l'écart entre le corps de capteur (24) et l'outillage (16) lorsque l'outillage (16) est pivoté.

4. Dispositif de pivotement selon la revendication 3, caractérisé par le fait que

a) l'outillage (16) est situé sur un bras (12) qui est pivotable par le servomoteur (18) autour d'un axe de pivotement (14) relativement à un corps de base (10),

b) le système de tiges (40) a un levier de pivotement (42) monté pivotablement sur le bras (12),

c) le corps de capteur (24) est attaché à un membre basculant (44) monté de manière basculante à l'extrémité libre du levier de pivotement (42),

d) le premier support (32) est guidé de manière glissante sur le levier de pivotement (42), (e) le deuxième support (38) est guidé par glissement sur le levier de pivotement (42) entre le premier support (32) et le membre basculant (44),

f) en outre, le système de tiges (40) a une première bielle (48) qui, d'un côté, est articulée au corps de base (10) en un point d'articulation (50) déplacé relativement à l'axe de pivotement (14) approximativement dans la direction de l'axe longitudinal du bras (12) lorsque le bras (12) est en position de fonctionnement, et qui, de l'autre côté, est articulée au deuxième support (38), et

g) le système de tiges (40) a une deuxième bielle (52) qui à une extrémité est articulée au premier support (32) et à l'autre extrémité est articulée à la première bielle (48).

5. Dispositif de pivotement selon la revendication 4, caractérisé par le fait que la première bielle (48) est reliée au deuxième support (38) par une troisième bielle (54).

6. Dispositif de pivotement selon la revendication 4 ou 5, caractérisé par le fait que

a) les membres de commande (26, 28) comprennent une paire de microrupteurs (56, 58) qui sont disposés avec des boutons de commande (60, 62) se faisant face sur le premier support (32), et qui peuvent commandés des moyens commandant fluide par des enroulements d'électro-aimant,

b) le premier membre d'actionnement (30) a une tige de commutation (64) longitudinalement déplacable, qui s'étend avec un bras de commutation latéral (66) entre les boutons de commande (60, 62) des microrupteurs (56, 58),

c) un bras latéral (68) est prévu au membre basculant (44), lequel est couplé à un membre de pression (70) guidé sur la tige de commutation (64), et

d) des aboutements de ressort (72, 74) sont attachés à la tige de commutation (64) sur les deux côtés du membre de pression avec espacement de celui-ci, et des ressorts spiral (76, 78) entourant la tige de commutation (64) sont appliqués d'un côté contre un front du membre de pression (70) chacun, et de l'autre côté, contre l'aboutement de ressort (72, 74) en face de ce front.

7. Dispositif de pivotement selon l'une des revendications 4 à 6, caractérisé par le fait que

(a) le membre basculant (44) a une tige transversale (80) s'étendant essentiellement perpendiculairement par rapport à l'axe longitudinal du levier de pivotement (42),

(b) le deuxième membre d'actionnement (36) est articulé à la tige transversale (80).

8. Dispositif de pivotement selon la revendication 7, caractérisé par le fait que le deuxième membre d'actionnement (86) est une tige d'actionnement constituée de deux parties (82, 84) télescopiquement glissables l'une relativement à l'autre et couplées l'une à l'autre par un ressort (86) prétendu contre une butée.

9. Dispositif de pivotement selon l'une des revendications 4 à 8, caractérisé par le fait qu'un amortisseur (88) est prévu entre le levier de pivotement (42) et le membre basculant (44).

FIG.1

FIG.2

FIG. 3